# EUROPEAN PATENT SPECIFICATION

(11) **EP 2 821 712 B1**
(45) Date of publication and mention of the grant of the patent: **25.04.2018**
(21) Application number: 13754247.8
(22) Date of filing: 18.02.2013
(51) Int. Cl.: F24D 3/10, F16L 41/02, F16L 29/00, F16K 5/00, F16K 11/22, F16L 39/06, F24D 19/00, F16K 27/00, F16K 5/06

(54) **ANTI-LIME COLLECTORS HAVING A MODULAR STRUCTURE**
KALKSCHUTZKOLLEKTOREN MIT MODULARER STRUKTUR
STRUCTURE MODULAIRE DE COLLECTEURS ANTI-CALCAIRE

(30) Priority: 29.02.2012 ES 201230298
(43) Date of publication of application: 07.01.2015
(73) Proprietor: Valvulas Arco, S.L., 46134 Foios (Valencia) (ES)
(72) Inventor: FERRER BELTRAN, José María, E-46134 Valencia (ES)
(74) Representative: Molina Garcia, Julia
(86) International application number: PCT/ES2013/070097
(87) International publication number: WO 2013/128050

(56) References cited:
- EP-A1- 1 965 119
- EP-A1- 2 365 237
- EP-A1- 2 492 573
- EP-A2- 0 715 112
- EP-A2- 1 679 465
- WO-A1-01/71236
- WO-A2-2011/102669
- WO-A2-2011/102669
- DE-A1-102008 055 994
- DE-U1- 29 817 972
- JP-A- H11 325 372
- JP-A- 2001 165 381
- US-A- 5 588 638
- US-A- 5 588 638
- US-B2- 6 929 032

## Description

The present invention, modular anti-scale collector structure, is constituted by a novel structure of collectors designed for its use in fluid installations in general, although they are centralized plumbing installations, both of drinking water and domestic hot water (DHW).

Among the main advantages of this structure it can be cited that each module incorporates a 1/4 turn actuation valve, making it possible to individually cut-off the supply of water to the different consumption points to repair or replace them.

Likewise, the collectors have a novel quick connection mechanism, which makes it possible to perform the composition required in very little time, facilitating the installation.

Finally, each collector module incorporates the anti-scale solution based on the spherical closing mechanism, by a ball-shaft, manufactured in a single part with an anti-scale polymer.

### Prior art

This novel invention aims to give a solution to the problem derived from the accumulation of limescale in the valves of the installations, so that they progressively lose closing capacity. At the same time, this solution is implemented in a system of quick connection modules.

The present modular anti-scale collector structure incorporates a valve which is equipped with a ball-shaft comprising a shaft and a spherical seal (or ball) which are constituted by a single part manufactured with an anti-scale polymer. This disposal increases its resistance, facilitates gentle manoeuvring and prevents limescale from being able to adhere to it.

In those installations where the hardness of the water or temperature facilitate the deposition of limescale, generally associated to a low frequency of valve manoeuvring, an increase in hardness of the manoeuvre occurs after long periods of time.

The anti-scale ball-shaft prevents this problem, which could incapacitate the collector, and also maintains the flow constant over time, as it avoids the limescale from adhering and thus reduces the passage of water.

The main advantages of the modular anti-scale collector structure and which therefore make it different from any other product on the market are the following:
- It is the first modular anti-scale collector structure for fluids and also for drinking water and DHW.
- The unitary design of its modules allows making any necessary combination in an installation. Below, we can see how these advantages give rise to many others that can be seen during the different phases of the product's life.

On the other hand, its particular structure has financial advantages. The structure makes it possible to reduce the stocks of article both of the wholesaler and the installer, thus allowing it to adapt to the demand at any given time thanks to:
- Three elements (initial module, end module and valve) allow any combination of outlets to be made in the collector (for example, using three modules and by their combination we can make collectors with multiple outlets).
- The outlet connection of a same module can be connected to the corresponding service, only by changing the accessory that is coupled at its outlet, allowing connections of compression or push type,...
- The same collector can serve for different types of pipes, both of plastic material (cross-linked polyethylene, multilayer...) and metal (copper...).

In addition, on the other hand, due to its reduced dimensions it occupies less space in the warehouse and in the installation.

The use of plastic materials does not take away properties in this structure, but it does give it a series of advantages against traditional materials such as tin.
- Use of anti-scale polymers in the ball-shaft. This polymer avoids deposition of limescale and extends the life of the seal, in addition to maintaining the flow constant over time.
- Less weight and, therefore, savings in raw materials against the traditional systems manufactured in tin. Its reduced weight also facilitates the transport and storage, thus reducing the consumptions of energy during its transport and handling.
- Plastic materials perfectly compatible with drinking water.

On the other hand, the present modular anti-scale collector structure simplifies its assembly and installation, thanks to its quick connection system which it presents against other mechanisms known in the state of the art:
- Ease and speed of assembly between the different modules.
- There is no need to provide sealing materials between the different modules or their connections.
- Tools are not necessary for the assembly of the different modules.
- Its assembly and dismantling is very simple, which avoids errors during its installation.
- It allows the installer to choose between two types of connection: compression and push and different types of plastic and metal pipe, thus adapting to different needs that may arise at any given time.

In addition, due to its reduced size (separation can be performed between connections at 40 mm between the shafts of the outlet connections) the installation can be adapted to reduced spaces, also allowing an easy installation.

In terms of its maintenance, the structure is devised to centralize the opening and closure of all the service points of the installation, so that it saves time and facilitates the work of the maintenance person.

Thanks to its quick connection system and the materials used, its maintenance or repair is simple and fast. These characteristics are thanks to:
- The anti-scale polymer used in the ball-shaft gives the structure a much reduced maintenance,
- The quarter turn closure makes it possible to determine at any given time if the seal is open or closed. On the other hand, the quarter turn allows a fast and simple manoeuvre.
- If a module is broken its replacement is very simple and quick thanks to the quick connection system.

Therefore, the present structure is a novelty and an advance in the State of the Art in this type of fittings.

Document WO 2011/102669 A2 discloses a manifold type pipe at least comprising a branch pipe formed in a pipe passage having a flow hole through which fluid flows, and an input valve having been formed at an end portion of the pipe passage, and an outlet valve formed by a joint coupler at the other end portion, and an outlet valve of a joint coupler connected with a limited rotation angle at an input valve of at least one joint coupler.

Document US 5 588 638 A discloses a ball valve that prevent scale formation on the exterior surface of the ball element. The ball valve comprises a ball element, a housing, and a jacket. The ball element has three ports formed therein and is seated within the jacket in the housing. The first and second ports of the ball element form a fluid conduit and the third port intersects the fluid conduit perpendicularly. The closest prior art document US 6 929 032 B2 describes a manifold with interconnecting, non-threaded modular sections. The connected sections define a fluidic passageway and at least one valved outlet. The valved outlet is reversible to enable the valve to be readily accessible when the modular section is in any orientation.

### Description

The present modular anti-scale collector structure is fundamentally constituted by a structure designed for all type of fluid installations in general provided with a quick connection mechanism which makes it possible to perform the distribution of collectors required for each installation, from a main channel or distributor to a plurality of secondary channels or bypasses, by the connection of different modules. This connection is made quickly, simply and without the user of connection sealing materials such as PTFE, tow or others, not requiring the use of any tool for the assembly or dismantling.

The assembly process consists of a simple process as it is performed with the combinations of collectors that are required with different installation types, being characterized in that it is constituted by the following main elements of the structure:
- Intermediate or supply modules, responsible for controlling the supply to each one of the services of the installation, each intermediate module having its own quarter-turn valve, with anti-scale system, which allows the actuation on a certain service, without affecting the operation of the rest.
- End module for closing the collector in its end, allowing in the case of need, to expand on the number of intermediate collectors without the need for changing the already existing ones.,
- Connection valve of the structure to the drinking water or DHW supply by a spherical valve.

The modular structure has a main or central channel wherethrough the fluid circulates and bypasses perpendicular to said main channel which constitute the outlets of each one of the intermediate modules. On said outlets are disposed each of the quarter-turn shut-off valves, with which the intermediate valves are equipped.

The connection valve of the structure to the drinking water supply provides a quick connection at one of the ends thereof and on the opposite side a standard male or female threaded connection. In this way it avoids having a transition part between the quick connection system and the mains for the supply of drinking water, as it is integrated in the inlet valve.

The structure also has a wide range of accessories to perform the connections of each one of the intermediate modules to the corresponding service. Having: among others of those indicated below:
- Compression connection. The connection to the outlet pipes is performed by means of a set of compression elements, such as nut, double cone, nozzle, etc., which enables the connection to various types of pipes of plastic material (cross-linked polyethylene, multilayer,...) or metal, such as copper.
- Push connection. The connection to the outlet pipes is performed by means of a quick connection system typically known as PUSH; which enables the connection to various types of pipes of plastic material (cross-linked polyethylene, multilayer,...) or metal, such as copper.

Once assembled, all the modules that make up a certain installation have security locks, constituted by covers which can be inserted in grooves integrated in the cover of each collector, which are inserted in each one of the connections of the modules, preventing them from being able to move. These locks can be manually removed if necessary to dismantle the collector.

The structure also has two types of supply identifiers: identifying discs and the security locks.

The identifying discs make it possible to identify if the supply is of hot or cold water, and the most typical supplies of the installations: washing machine, sink, shower, WC, bidet.

Additionally, the security locks, in addition to the locking function of the modular structure once assembled, are disposed in blue and red colour. These colours allow a fast and clear identification of the collectors which carry cold and hot water.

In the intermediate modules, each one equipped with their own valve, the internal sealing of said valve is guaranteed by a fastening grip which presses the elastomer seat (NBR, EPDM, FKM,..) against the shaft seal, thus obtaining the internal sealing. This grip and seat system cannot be dismantled, thus avoiding undue manipulations.

With respect to the external sealing, of the valves inserted in the intermediate modules, two elastomer seals, preferably o-ring housed in the upper part of the shaft seal guarantee the external sealing. This system provides extra security against leaks, aging, wear.

In terms of the manoeuvring of the valves of the intermediate collectors, which is relatively smooth, an adapter has been developed for the control which further facilitates manoeuvring, in cases of difficult access.

The connection valve of the structure to the drinking water supply is equipped with a shaft mechanism and a spherical seal, of quarter turn operation.

### Preferred embodiment of the invention

Below, a detailed description shall be made of the modular anti-scale collector structure, object of the present invention, with reference to the attached drawings, representing, by way of non-limiting example, a preferred embodiment susceptible to all those detail variations which do not suppose a fundamental alteration of the essential characteristics of said improvements.

In the mentioned drawings it is illustrated:

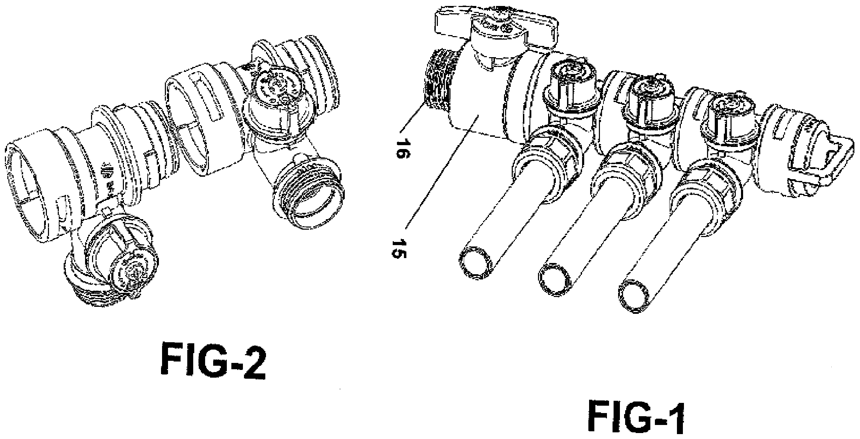

In figure 1: Perspective view of the modular anti-scale collector structure.
In figure 2: View of a pair of intermediate modules before being assembled together.

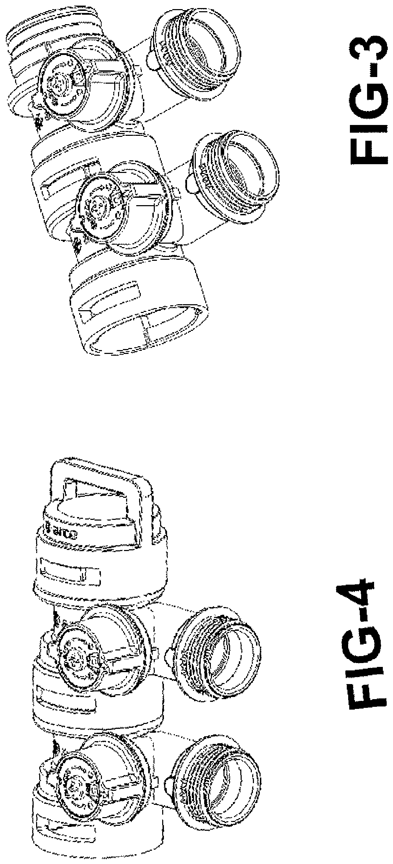

In figure 3: View of a pair of intermediate modules after being assembled together.
In figure 4: View of a pair of intermediate modules together with the end module for closing the collector in its end.
In figure 5: Detailed view of cross-section of the modular anti-scale collector structure with detail of the internal sealing elements of the modular anti-scale collector structure.

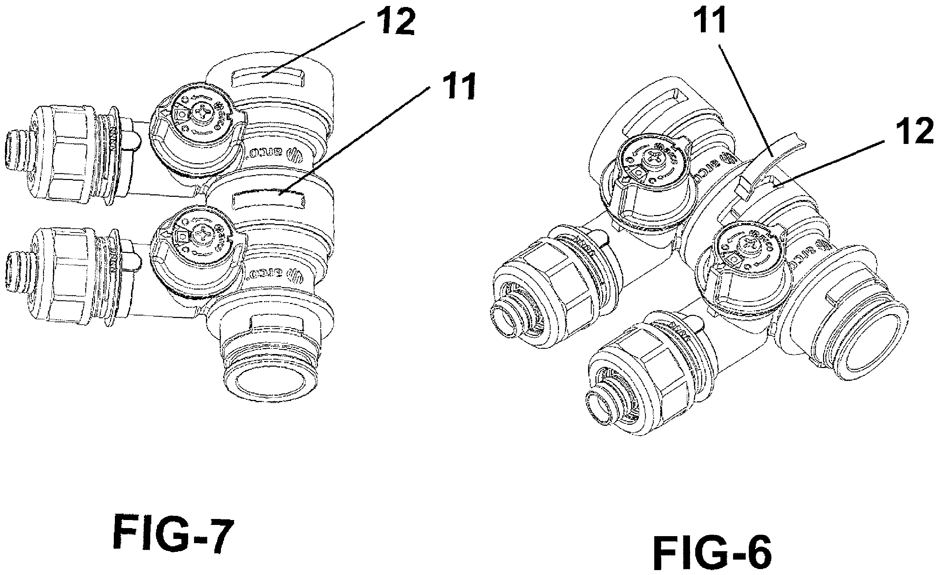

In figure 6: View of a pair of intermediate modules once assembled at the time of introduction of the security lock in the corresponding groove.
In figure 7: View of a pair of intermediate modules once assembled after the time of introduction of the security lock in the corresponding groove.

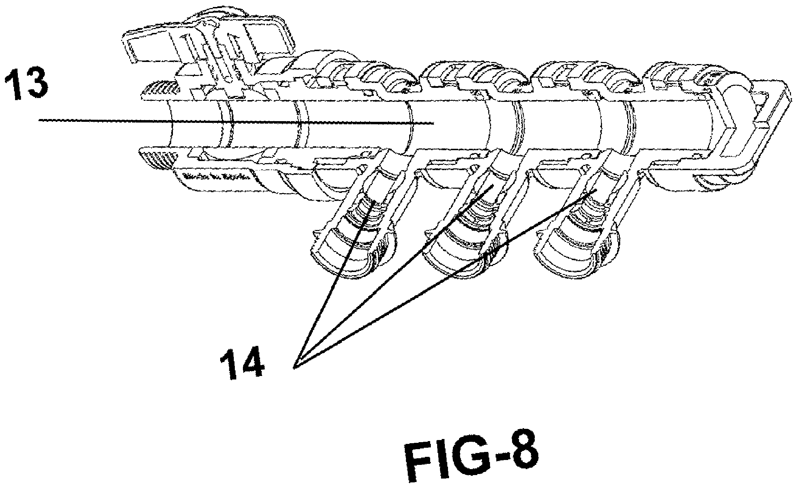

In figure 8: Sectional perspective view in detail of the modular anti-scale collector structure illustrative of the main channel or distributor and of the secondary channels or bypasses.

According to the example of embodiment represented, the modular anti-scale collector structure is designed for all type of fluid installations and in particular for domestic or collective drinking water or domestic hot water installations from a main channel (13) or distributor to a plurality of secondary channels (14) or bypasses.

In turn, it is equipped with a quick connection mechanism which makes it possible to perform the distribution of collectors required for each installation, by the quick connection of different modules as they are provided with a mechanism, of ratchet and groove, constituted in the enveloping body of each module, which allows the fitting between adjacent modules with a simple quarter-turn rotation. This connection is made quickly, simply and without the user of connection sealing materials such as PTFE, tow or others.

In addition, for the assembly of the different modules, the use is not required of any tool for the assembly or dismantling (if required).

The assembly process consists of a simple process as it is performed with the combinations of collectors that are required with different installation types, being characterized in that it is constituted by the following main elements of the structure:
- Intermediate or supply modules, responsible for controlling the supply to each one of the services of the installation, each intermediate module having its own quarter-turn valve, with anti-scale system, which allows the actuation on a certain service, without affecting the operation of the rest.
- End module for closing the collector in its end, allowing in the case of need, to expand on the number of intermediate collectors without the need for changing the already existing ones.
- Connection valve of the structure to the drinking water or DHW supply by a spherical valve.

The modular structure has a main or central channel wherethrough the fluid circulates and bypasses perpendicular to said main channel which constitute the outlets of each one of the intermediate modules. On said outlets are disposed each of the quarter-turn shut-off valves, with which the intermediate valves are equipped.

The connection valve of the structure to the drinking water supply provides a quick connection valve (15) at one of the ends thereof and on the opposite side a standard male or female threaded connection (16). In this way it avoids having a transition part between the quick connection system and the mains for the supply of drinking water, as it is integrated in the inlet valve.

The structure also has a wide range of accessories to perform the connections of each one of the intermediate modules to the corresponding service. Having: among others of those indicated below:
- Compression connection. The connection to the outlet pipes is performed by means of a set of compression elements, such as nut, double cone, nozzle, etc., which enables the connection to various types of pipes of plastic material (cross-linked polyethylene, multilayer,...) or metal, such as copper.
- Push connection. The connection to the outlet pipes is performed by means of a quick connection system typically known as PUSH; which enables the connection to various types of pipes of plastic material (cross-linked polyethylene, multilayer,...) or metal, such as copper.

Once assembled, all the modules that make up a certain installation have security locks, constituted by covers (11) which can be inserted in grooves (12) integrated in the cover of each collector, which are inserted in each one of the connections of the modules, preventing them from being able to move once fitted. These locks can be manually removed if necessary to dismantle the collector.

The anti-scale modular collector structure also has two types of supply identifiers: identifying discs and the security locks.

The identifying discs make it possible to identify if the supply is of hot or cold water, and the most typical supplies of the installations: washing machine, sink, shower, WC, bidet.

Additionally, the security locks, in addition to the locking function of the modular structure once assembled, are disposed in blue and red colour. These colours allow a fast and clear identification of the collectors which carry cold and hot water.

In the intermediate modules, each one equipped with their own valve, the internal sealing of said valve is guaranteed by a fastening grip which presses the elastomer seat (NBR, EPDM, FKM,..) against the shaft seal, thus obtaining the internal sealing. This grip and seat system cannot be dismantled, thus avoiding undue manipulations.

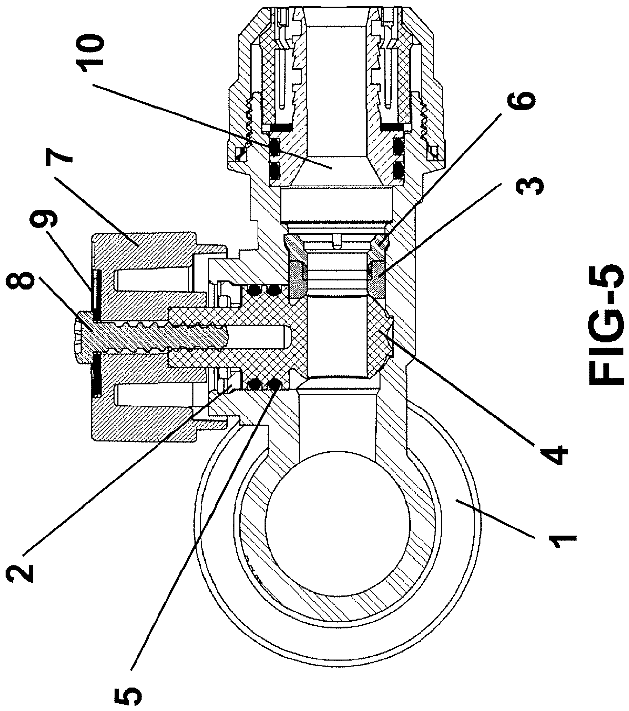

The structure is composed of the following constructive elements illustrated in detail in figure 5
(1) Reinforced polyamide main body
(2) Acetal resin seat grip
(3) Elastomer seat
(4) Anti-scale polymer ball-shaft
(5) Elastomer seals
(6) Acetal resin shaft grip
(7) Plastic or metal control
(8) Stainless steel screw
(9) Printed aluminium identifier disks
(10) Connection accessories

With respect to the external sealing, of the valves inserted in the intermediate modules, two elastomer seals, preferably o-ring housed in the upper part of the shaft seal guarantee the external sealing. This system provides extra security against leaks, aging, wear,..

In terms of the manoeuvring of the valves of the intermediate collectors, which is relatively smooth, an adapter has been developed for the control which further facilitates manoeuvring, in cases of difficult access.

The connection valve of the structure to the drinking water supply is equipped with a shaft mechanism and a spherical seal, of quarter turn operation.

## Claims

1. Modular anti-scale collector structure designed for all type of fluid installations in general, provided with a quick connection mechanism of fluid distribution collectors, from a main channel or distributor (13) to a plurality of secondary channels or bypasses (14), by the connection of different modules, where the structure is constituted by intermediate or supply modules to each one of the services of the installation, each intermediate module having a connection mechanism with the other adjacent modules, of ratchet and groove, constituted in the enveloping body of each module, these being provided with their own valve, with anti-scale system (4), independently functional from the rest, together with an end module (15) for closing the collector in its end and finalizing the described structure with a spherical valve to connect the structure to the supply of the main channel or fluid distributor, where the modular anti-scale collector structure incorporates security locks, constituted by covers (11) which can be inserted in grooves (12) integrated in the cover of each collector, in each one of the connections of the modules, **characterized in that** the valves of the intermediate modules are provided with anti-scale system (4) and have two types of identifiers of supply by identifying discs and by that of the security locks.

2. Modular anti-scale collector structure, according to claim 1, wherein the valves of the intermediate modules are of quarter turn, incorporating a ball-shaft of a single part.

3. Modular anti-scale collector structure, according to at least one of the preceding claims, wherein the valves of the intermediate modules have an internal sealing system by o-rings (5).

4. Modular anti-scale collector structure, according to at least one of the preceding claims, wherein the connection valve of the structure to the main supply provides a quick connection at one of the ends thereof and on the opposite side a standard male or female threaded connection (16), eliminating the need for transition parts between the quick connection system and the supply of fluids.

5. Modular anti-scale collector structure, according to at least one of the preceding claims, wherein they have a wide range of accessories to make connections of each one of the intermediate modules to the corresponding service, by means of a connection by compression or by quick connection system for pipes of plastic or metal material.

6. Modular anti-scale collector structure, according to at least one of the preceding claims, wherein the connection valve comprises a ball-shaft mechanism (4) wherein the shaft and the plug are constituted by the same part.

## Patentansprüche

1. Modulare Antikalk-Kollektorstruktur, konzipiert für alle Arten von Fluidanlagen im Allgemeinen, ausgestattet mit einem Schnellverbindungsmechanismus von Fluidverteilungskollektoren von einem Hauptkanal oder Verteiler (13) zu einer Vielzahl von sekundären Kanälen oder Bypässen (14) durch die Verbindung von unterschiedlichen Modulen, worin die Struktur durch Zwischen- oder Versorgungsmodule zu jedem der Dienste der Anlage gebildet ist, wobei jedes Zwischenmodul einen Verbindungsmechanismus aus Ratsche und Nut mit den anderen angrenzenden Modulen aufweist, der in dem Hüllkörper jedes Moduls gebildet ist, wobei diese mit ihrem eigenen Ventil ausgestattet sind, mit einem unabhängig vom Rest funktionsfähigen Antikalksystem (4) zusammen mit einem Endmodul (15) zum Schließen des Kollektors an seinem Ende und zum Abschließen der beschriebenen Struktur mit einem Kugelventil, um die Struktur mit der Versorgung des Hauptkanals oder Fluidverteilers zu verbinden, worin die modulare Antikalk-Kollektorstruktur in jeder der Verbindungen der Module Sicherheitsverschlüsse beinhaltet, gebildet durch Abdeckungen (11), die in Nuten (12) eingeführt werden können, die in die Abdeckung jedes Kollektors integriert sind, **dadurch gekennzeichnet, dass** die Ventile der Zwischenmodule mit einen Antikalksystem (4) ausgestattet sind und zwei Arten von Identifikatoren der Versorgung durch identifizierende Scheiben und durch die Sicherheitsverschlüsse aufweisen.

2. Modulare Antikalk-Kollektorstruktur nach Anspruch 1, worin die Ventile der Zwischenmodule von einer Vierteldrehung sind, enthaltend einen Kugelschaft aus einem einzigen Bauteil.

3. Modulare Antikalk-Kollektorstruktur nach mindestens einem der vorstehenden Ansprüche, worin die Ventile der Zwischenmodule ein internes Dichtungssystem durch O-Ringe (5) aufweisen.

4. Modulare Antikalk-Kollektorstruktur nach mindestens einem der vorstehenden Ansprüche, worin das Verbindungsventil der Struktur mit der Hauptversorgung eine Schnellverbindung an einem der Enden desselben und an dem gegenüberliegenden Ende eine standardmäßige Verbindung mit Außen- oder Innengewinde (16) bereitstellt, sodass die Notwendigkeit von Übergangsteilen zwischen dem Schnellverbindungssystem und der Versorgung von Fluiden entfällt.

5. Modulare Antikalk-Kollektorstruktur nach mindestens einem der vorstehenden Ansprüche, worin sie ein breites Band an Zubehörteilen aufweisen, um Verbindungen von jedem der Zwischenmodule zu dem entsprechenden Dienst mittels einer Verbindung durch Kompression oder durch ein Schnellverbindungssystem für Rohre aus Kunststoff- oder Metallmaterial herzustellen.

6. Modulare Antikalk-Kollektorstruktur nach mindestens einem der vorstehenden Ansprüche, worin das Verbindungsventil einen Kugelschaftmechanismus (4) umfasst, worin der Schaft und der Steckverbinder aus demselben Bauteil gebildet sind.

## Revendications

1. Structure collectrice antitartre modulaire conçue pour tous types d'installations de fluide en général, munie d'un mécanisme de raccordement rapide des collecteurs de distribution de fluide, depuis un canal ou distributeur principal (13) jusqu'à une pluralité de canaux ou by-pass secondaires (14), par le raccordement de différentes modules, où la structure est constituée par des modules intermédiaires ou d'alimentation à chacun des services de l'installation, chaque module intermédiaire possédant un mécanisme de raccordement avec les autres modules adjacents, à encliquetage et rainure, constitué dans le corps enveloppant de chaque module, ceux-ci étant équipés de leur propre vanne, avec système antitartre (4), fonctionnelle indépendamment du reste, conjointement avec un module d'extrémité (15) pour fermer le collecteur à son extrémité et finaliser la structure décrite avec une vanne sphérique pour raccorder la structure à l'alimentation du canal ou distributeur de fluide principal, où la structure collectrice antitartre modulaire comporte des mécanismes de verrouillage, constitués de caches (11) qui peuvent être insérés dans des rainures (12) intégrées au cache de chaque collecteur, dans chacun des raccordements des modules, **caractérisée en ce que** les vannes des module intermédiaires sont équipées d'un système antitartre (4) et possèdent deux types d'identificateurs d'alimentation par disques d'identification et par celui des mécanismes de verrouillage.

2. Structure collectrice antitartre modulaire, selon la revendication 1, dans laquelle les vannes des modules intermédiaires sont des vannes quart de tour comportant un axe à bille fait d'une unique pièce.

3. Structure collectrice antitartre modulaire, selon l'une au moins des revendications précédentes, dans laquelle les vannes des modules intermédiaires ont un système d'étanchéité interne par joints toriques (5).

4. Structure collectrice antitartre modulaire, selon l'une au moins des revendications précédentes, dans laquelle la vanne de raccordement de la structure à l'alimentation principale présente un raccordement rapide à l'une de ses extrémités et du côté opposé un raccordement fileté mâle ou femelle standard (16), supprimant la nécessité de pièces de transition entre le système de raccordement rapide et l'alimentation des fluides.

5. Structure collectrice antitartre modulaire, selon l'une au moins des revendications précédentes, dans laquelle se trouve une vaste gamme d'accessoires pour réaliser des raccordements de chacun des modules intermédiaires au service correspondant, par un raccordement par compression ou par système de raccordement rapide pour tuyaux en plastique ou en matériau métallique.

6. Structure collectrice antitartre modulaire, selon l'une au moins des revendications précédentes, dans laquelle la vanne de raccordement comprend un mécanisme d'axe à bille (4) dans lequel l'axe et l'embout sont constitués par la même pièce.
